# EUROPEAN PATENT APPLICATION

(11) **EP 4 668 224 A1**
(43) Date of publication of application: **24.12.2025**
(21) Application number: 24183058.7
(22) Date of filing: 19.06.2024
(51) Int. Cl.: G06V 10/26, G06V 10/764, G06V 10/774, G06V 10/82, G06V 20/58, G06V 20/70

(54) **VEHICLE, APPARATUS, DATA CARRIER, COMPUTER PROGRAM, TRAINING METHOD, NEURAL NETWORK, TRAINING DATA, AND METHOD FOR LABELLING PIXELS OF AN IMAGE**

(71) Applicant: Elektrobit Automotive GmbH, 91058 Erlangen (DE)
(72) Inventor: Chandrasekaran, Kavin, 91058 Erlangen (DE)
(74) Representative: Aumovio Corporation

(57) **Abstract**

Embodiments of the present disclosure relate to a vehicle, an apparatus, a data carrier, a computer program, a training method, a neural network, training data, and a method for labelling pixels of an image. The method comprises assigning one or more first pixels of the image to a first object class, assigning one or more second pixels of the image to a second object class, and assigning a third object class to the first and the second pixels based on a distance of the first pixels to the second pixels and based on the first and the second object class.

## Description

Embodiments of the present disclosure relate to a vehicle, an apparatus, a data carrier, a computer program, a training method, a neural network, training data, and a method for labelling pixels of an image. In particular, the present disclosure relates to a concept for pixel-wise grouping of semantically interrelated pixels.

Pixel-wise annotation with labels is crucial in various technologies, particularly in the realm of computer vision (e.g., semantic segmentation) and machine learning. In automotive applications, such detailed annotation allows for a precise identification and differentiation of objects within an image, which may be essential for the development of advanced driver-assistance systems (ADAS) and autonomous vehicles. Semantic segmentation enables algorithms to accurately detect and interpret road signs, lane markings, pedestrians, and other vehicles, thereby enhancing safety and navigation efficiency. Beyond automotive uses, pixel-wise labeling is vital in medical imaging for identifying disease patterns, in agriculture for monitoring crop health, and in surveillance for recognizing specific activities or objects. Detailed annotation helps to improve the accuracy of machine learning models by providing a rich dataset for training, ultimately leading to more reliable and robust automated systems. It supports the creation of high-fidelity simulations and real-time processing applications, driving innovation and effectiveness across various fields by ensuring that the underlying data is meticulously labeled and understood.

So, semantic segmentation may require pixel-level annotations, which means that every pixel in an image needs to be labeled with the correct class. A higher level of detail makes the annotation process more time-consuming compared to bounding box annotations. Semantic segmentation often requires annotators to accurately outline the boundaries of objects, including fine details and intricate shapes. Hence it is one of the most time consuming and tedious tasks that would involve huge annotation cost. On the other hand, this computer vision task becomes increasingly more important with respect to autonomous driving.

However, model performance may utterly rely on the accuracy of pixel annotations/labels. To reduce costs in terms of time and money, one can still consider using a relevant pre-trained model to generate labels.

In many cases, the semantic segmentation labels aren't available or aren't accurate.

So, e.g., a pre-trained model predicts a car, a person, and a bicycle. But it may require labels for these - "car", "person", and "bicyclist". A person who rides a bicycle is called a bicyclist. Meaning if a person rides a bicycle, then both the person and the bicycle should be considered as one class. But when a person is walking alone, then it should be just a "person" class. But there is no dataset that contains "bicyclist" as a class. This means directly using any pre-trained model supporting a limited number of labels are suboptimal.

Hence, there is a demand for an improved concept of labeling pixels of an image. One goal of the present disclosure is to improve the accuracy of (pseudo-)labels that any pre-trained model could generate so that manual labeling of data for semantic segmentation can be (partly) avoided or reduced.

This demand may be satisfied by the subject-matter of the appended independent claims. Optional embodiments thereof are disclosed in the appended dependent claims.

One idea of the solution to this according to the present disclosure is to perform a "pixel-wise grouping" so that, e.g., when a person pixel and a bicycle pixel are close to each other, those pixels are assigned to the class "bicyclist" and perform the model training based on those annotation. This grouping will be applicable to all the objects in the camera frame. For example; the possible grouping scenarios shall be 1) person with a dog connected by a rope, 2) old people walking with a cane or a four wheeled walker etc.

Embodiments of the present disclosure provide a method for labelling pixels of an image. The method comprises assigning one or more first pixels of the image to a first object class, assigning one or more second pixels of the image to a second object class, and assigning a third object class to the first and the second pixels based on a distance of the first pixels to the second pixels and based on the first and the second object class.

This allows to consider semantic relations between available labels and plausible combinations of (actually independent) objects for single pixels for a more accurate vehicle annotation.

In practice, the third object class may be assigned to the first and the second pixels if the distance does not exceed a predefined threshold. The threshold, e.g., may be defined such that the first and the second pixels actually correspond to the third object class in a desired portion or at least in most of the cases.

In some embodiments, the method comprises providing one or more composite object classes representing different predefined combinations of object classes. Assigning the third object class may comprise selecting from the object classes a composite object class representing a combination of the first and the second object class as third object class.

In examples, the first object class represents a person, the second object class represents a bicycle, and the third object class represents a bicyclist. In further examples, the first object class represents a person, the second object class represents a dog, and the third object class represents a person walking the dog. In a still further example, the first object class represents a person, the second object class represents a walking aid, and the third object class represents a hampered person.

A skilled person having benefit from the present disclosure will appreciate that the proposed approach may be applied for further object classes and combinations thereof. In particular, the proposed concept may be applied not only for the combination of two but also for combinations of more than two object classes. So, for example, pixels of more than two object classes may be grouped in a group representing a composite object class.

In some embodiments, the method comprises using the labelled images for training a neural network for semantic segmentation and for detecting the third object class in image data. In doing so, the respective image labeled according to the proposed approach may lead to more accurate results of semantic segmentation using the training a neural network.

In some examples, the method comprises generating a mask including the first and the second pixels for the third object class and providing the mask as ground truth for training the neural network.

As the skilled person will appreciate, the proposed approach may be applied in various applications including automotive applications, e.g., for navigating a vehicle based on the labeled image.

So, in practice, the method may further comprise controlling a vehicle based on the labeled pixels.

As well, the proposed approach may be applied for generating training data for training a neural network.

Accordingly, embodiments of the present disclosure provide training data including a labelled image obtainable by a method according to the present disclosure.

Also, embodiments of the present disclosure provide a training method for training a neural network, the training method comprising training the neural network using the proposed training data.

Further embodiments provide a neural network obtainable by a method according to the proposed approach.

The proposed method may be implemented such that part or all of its steps are executed by a computer or any other type of programmable hardware. Accordingly, embodiments of the proposed method may provide a respective computer-implemented method.

Likewise, embodiments may be implemented in a computer program.

For example, embodiments may provide a computer program comprising instructions which, when the computer program is executed by a computer, cause the computer to carry out a method for labeling pixels of an image, and/or a training method, and/or to apply the neural network, as proposed herein.

Further embodiments provide a computer-readable data carrier having stored thereon the proposed computer program.

Still further embodiments provide an apparatus comprising one or more interfaces for communication and a data processing circuit configured to execute one or more of the proposed methods, and/or to apply the proposed neural network.

Other embodiments provide a vehicle comprising the proposed apparatus.

Further, embodiments are now described with reference to the attached drawings. It should be noted that the embodiments illustrated by the referenced drawings show merely optional embodiments as an example and that the scope of the present disclosure is by no means limited to the embodiments presented:

### Brief description of the drawings

Fig. 1 shows a flow chart schematically illustrating an embodiment of a method for labelling pixels of an image;
Fig. 2 shows a flow chart schematically illustrating another embodiment of the method including mask generation;
Fig. 3 shows an exemplary result of the mask generation; and
Fig. 4 shows a block diagram schematically illustrating an embodiment of an apparatus according to the proposed approach.

Semantic segmentation is crucial in automotive applications, particularly for autonomous driving and advanced driver-assistance systems (ADAS). It involves classifying each pixel in an image into predefined categories such as road, vehicles, pedestrians, and traffic signs. This pixel-level understanding enables the vehicle to perceive its environment accurately, facilitating safe navigation, obstacle avoidance, and adherence to traffic laws. High accuracy and semantic segmentation ensure reliable detection and classification of various objects and its corresponding features, directly impacting the safety and efficiency of autonomous systems. Precision in this process is essential to prevent accidents and ensure smooth, real-time decision-making and dynamic driving conditions.

However, training data sets for training semantic segmentation may lack relevant information because of limited available labels for the training data sets. In practice, the labels may only differentiate between targets on object-level. For example, available labels may include the labels "bicycle" and "person" but not their combination - "bicyclist". Consequently, semantic segmentation models may not be able to identify combinations of different labels, e.g., bicyclists.

The present disclosure provides a solution to this, as outlined in more detail below with reference to the appended drawings.

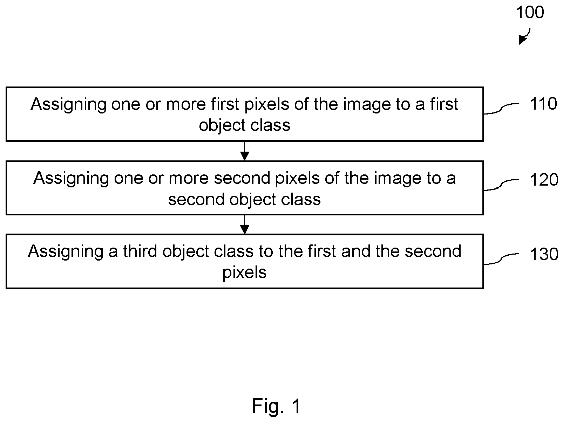

Fig. 1 shows a flow chart schematically illustrating an embodiment of a method 100 for labelling pixels of an image.

So, the image may be any kind of pixel-based image. In context of the present disclosure, pixels may be understood as the smallest addressable element of the image.

Method 100 comprises assigning 110 one or more first pixels of the image to a first object class and assigning 120 one or more second pixels of the image to a second object class. The first pixels and the second pixels may belong to different parts of the image. So, the first and the second pixels may be different pixels.

For assigning 110 and 120 pixels to the first and the second object class, they may be colored accordingly, as laid out in more detail later.

The object classes may be application specific. So, available object classes which can be assigned to the first and the second pixels may differ between different applications. For automotive applications, the available object classes, e.g., may include typical object classes of traffic environments, e.g., different vehicles (for example, "car", "truck", "bus", "tram", and/or the like), different infrastructure objects, different roads, different road signs, and/or the like. In particular, the available object classes may differentiate an object-level, e.g., between different (mobile) objects which may move independently from each other.

As mentioned above, the image may show a bicyclist. However, the available object classes may not include combinations of different movable objects/targets, e.g., "bicyclist". Accordingly, for a bicyclist, the first object class, e.g., is "bicycle" and the second object class is "person". However, this may lead to an undesired treatment of the bicyclist. So, training data lacking such relevant information for a desired application, e.g., semantic segmentation of traffic environments for autonomous driving systems, may lead to suboptimal decisions. In the above example, a bicyclist may be treated as a static and not as a mobile or moving object.

The proposed approach suggests assigning 130 a third object class to the first and the second pixels based on a distance of the first pixels to the second pixels and based on the first and the second object class. For this, further available object classes including combinations of different movable objects/targets may be provided and the third object class may be selected from those provided object classes. As the further available object classes comprise combinations of objects, the subject classes may be also understood as "composite object classes".

In this way, the provided further available object classes including the third object class may cover also (plausible) combinations of different movable objects/targets. As the skilled person will appreciate, this may be applied to any kind of plausible combination. For example, the first object class represents a person, the second object class represents a dog, and the third object class represents a person walking the dog, or the first object class represents a person, the second object class represents a walking aid, and the third object class represents a hampered person.

The skilled person will appreciate that the proposed solution provides a more detailed labeling of training data which enables better semantic segmentation models. In particular, such more detailed training data enables semantic segmentation models learning from such training data to identify complex targets such as bicyclists or motorcyclists. Consequently, such semantic segmentation models may be able to provide more information on the environment. In practice, this, e.g., may improve the understanding of the environment. Accordingly, this may lead to a better decision-making, e.g., for a better navigation of autonomous driving systems.

In practice, the first and the second pixels may be only grouped if they are close enough to each other. For this, e.g., a threshold-based decision process may be applied. For example, the third object class may be assigned to the first and the second pixels (only) if their distance does not exceed a predefined threshold. As the skilled person will appreciate, the distance may be determined based on different metrics. For example, the distance may be measured between certain pixels of the first and the second pixels. So, the distance, e.g., may be the shortest distance between any of the first and the second pixels. Alternatively, the distance may be the distance between respective average positions of the first and second pixels.

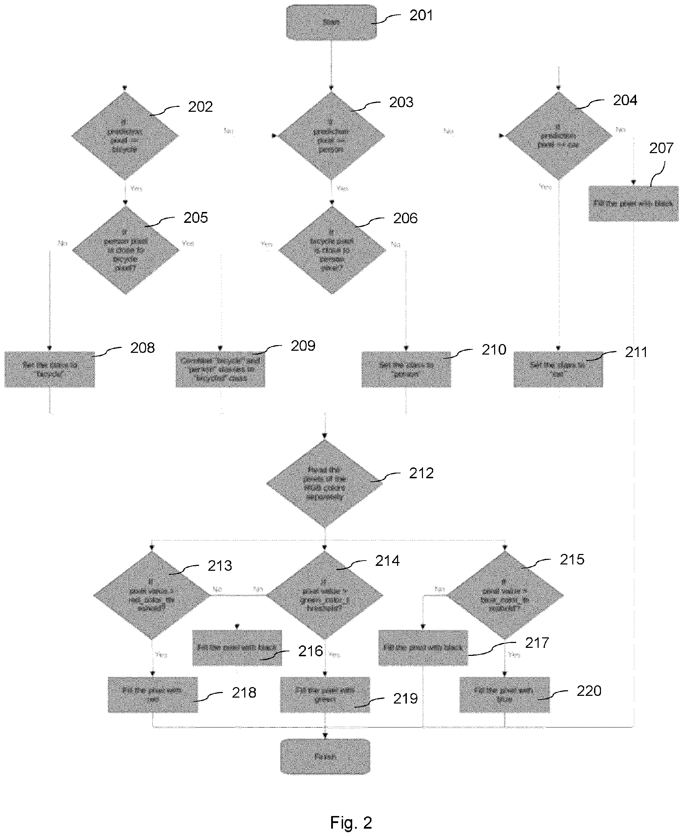

Further features and aspects of the proposed approach are now described below with reference to Fig. 2 which shows a flow chart schematically illustrating another embodiment of the proposed approach including mask generation.

In a first step (see step 201), e.g., an image to be labeled is provided to a pre-trained model configured to identify objects in the image.

So, the pre-trained model, e.g., corresponds to Mask-RCNN (Region-based Convolutional Neural Network) model pre-trained on training data set, e.g., on the coco dataset, for generating the pseudo-labels and a mask for detected objects.

In further steps (see steps 202, 203, and 204), the model predicts whether pixels belong the object classes "bicycle" (see step 202), "person" (see step 203), and "car" (see step 204).

If the model predicts that a pixel belongs to a car, the object class for this pixel is set to "car" (see step 211).

If a pixel belongs to none of the available classes, it is filled with black (see step 207).

If, according to the predictions, pixels belong to the class "bicycle", it is determined if they are close to a pixel assigned to the class "person" and vice versa to check if the pixels may relate to a bicyclist. As mentioned above, a threshold-based metric may be applied for this.

If they are close to each other, the pixels are assigned to the object class "bicyclist" (see step 209). Otherwise, if they are not close enough to each other, e.g., if their distance exceeds a predefined threshold, they keep their object class "bicycle" and "person", respectively.

So, provided that this pre-trained model predicts car, person, and bicycle. But the custom dataset requires labels for car, person, and bicyclist. A person who rides a bicycle is called bicyclist. Meaning if a person rides a bicycle, then both the person and the bicycle should be considered as one class. But when a person is walking alone, then it should be just a "person" class.

So, the proposed approach allows a "pixel-wise grouping" so that when the person pixel and the bicycle pixel are together, it is assigned to the class "bicyclist", e.g., to improve the resulting training data set.

Further, the present embodiment includes generating a (ground truth) mask or labels for training semantic segmentation.

For this, the predictions may be coded in different color channels of the pixels or combinations of color channels. For example, the pixels may have multiple color channels representing different object classes and a color value of said color channels may be determined based on a prediction probability/certainty of a respective object class. In practice, the pixels, e.g., may be RGB pixels including three color channels for red, green, and blue, respectively. In the present example, a red color channel relates to the object class "person", a green color channel relates to the object class "bicyclist" and "bicycle", and a blue color channel relates to the object class "car". If the object likely belongs to a certain object class, a pixel value of a respective color channel is higher than if it belongs less likely to said object class. As mentioned above, the same principle may be applied for combinations of color channels in order to represent further classes. For example, RGB channels may be filled with (red = 255, green = 255, blue = 0) to generate a yellow mask representing another class.

Another step 212 comprises reading the color channels of the pixels or, in other words, reading the pixels of the RGB colors (separately). In further steps 213, 214, and 215, a threshold-based color-based masking is applied. In doing so, e.g., a pixel is colored with a certain color of a respective color channel if its pixel value exceeds a certain threshold (see steps 218, 219, and 220). So, a pixel is colored red if the pixel value in the red color channel exceeds such predefined threshold, e.g., if the pixel value indicates a prediction probability/certainty of more than 50%, 60%, or 70%. Otherwise, if none of the pixel values exceeds the threshold, the pixel is colored/set black (see steps 216 and 217). In this way, a color-based masking or labelling for different object classes may be obtained. Such mask, e.g., may be applied as ground truth for training semantic segmentation of different object classes.

As well, the proposed approach may be applied for semantic segmentation of the environment. In automotive applications, e.g., the image labels according to the proposed approach may be applied for controlling a vehicle, e.g., for navigating the vehicle automatically or autonomously.

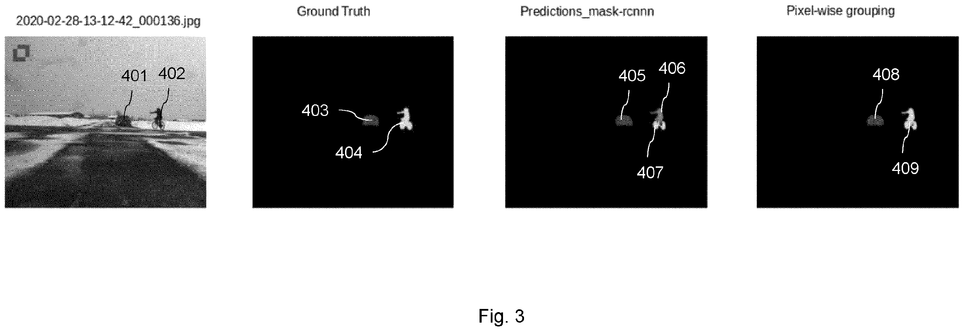

Fig. 3 shows exemplary results of the above labeling or mask generation for a (potential) training sample representing a traffic scene (first graphic from left) including a car 401 and a bicyclist 402.

As shown, a desired ground truth for training semantic segmentation (see second graphic from left, "Ground Truth") for the training sample shall ideally include a first mask 403 for the car and a second mask 404 for the bicyclist.

However, in other concepts (see third graphic from left, "Predictions_mask-rcnn"), separate masks 405, 406, and 407 are obtained for the car, a bicycle, and a person riding the bicycle.

According to the proposed approach (see fourth graphic from left, "Pixel-wise grouping"), a first mask 408 is obtained for the car and a second mask 409 coloring the bicycle and the person riding a bicycle is obtained for the bicyclist. As can be seen, the labeling or masking of the proposed approach is closer to an ideal ground truth than other concepts.

Embodiments of the proposed training method comprise training a neural network based on training data including training samples and a respective ground truth obtainable in accordance with proposed approach.

The skilled person having benefit from the present disclosure will appreciate that various training principles (e.g., various forms of supervised training) may be applied for training the neural network based on the training data.

Further embodiments correspond to a neural network obtainable by said training method.

The proposed approach, e.g., is implemented as a computer program comprising instructions which, when the computer program is executed by a computer, cause the computer to carry out an embodiment of any of the proposed methods and/or the trained neural network.

Such computer program may be stored on any computer-readable data carrier or storage medium (e.g., ROM, Optical, and/or the like).

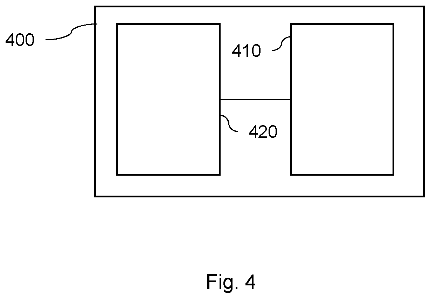

Further embodiments pertain to an apparatus as laid out in more detail below with reference to Fig. 4.

Fig. 4 shows a block diagram schematically illustrating an embodiment of such an apparatus 400. The apparatus comprises one or more interfaces 410 for communication and a data processing circuit 420 configured to execute an embodiment of any of the proposed methods and/or the trained neural network.

In embodiments, the one or more interfaces 410 may comprise wired and/or wireless interfaces for transmitting and/or receiving communication signals in connection with the execution of the proposed concept. In practice, the interfaces, e.g., comprise pins, wires, antennas, and/or the like. As well, the interfaces may comprise means for (analog and/or digital) signal or data processing in connection with the communication, e.g., filters, samples, analog-to-digital converters, signal acquisition and/or reconstruction means as well as signal amplifiers, compressors and/or any encryption/decryption means.

The data processing circuit 420 may correspond to or comprise any type of programable hardware. So, examples of the data processing circuit 420, e.g., comprise a memory, microcontroller, field programable gate arrays, one or more central, and/or graphical processing units. To execute the proposed method, the data processing circuit 420 may be configured to access or retrieve an appropriate computer program for the execution of the proposed method from a memory of the data processing circuit 420 or a separate memory which is communicatively coupled to the data processing circuit 420.

In the foregoing description, it can be seen that various features are grouped together in examples for the purpose of streamlining the disclosure. This method of disclosure is not to be interpreted as reflecting an intention that the claimed examples require more features than are expressly recited in each claim. Rather, as the following claims reflect, subject matter may lie in less than all features of a single disclosed example. Thus, the following claims are hereby incorporated into the description, where each claim may stand on its own as a separate example. While each claim may stand on its own as a separate example, it is to be noted that, although a dependent claim may refer in the claims to a specific combination with one or more other claims, other examples may also include a combination of the dependent claim with the subject matter of each other dependent claim or a combination of each feature with other dependent or independent claims. Such combinations are proposed herein unless it is stated that a specific combination is not intended. Furthermore, it is intended to include also features of a claim to any other independent claim even if this claim is not directly made dependent to the independent claim.

Although specific embodiments have been illustrated and described herein, it will be appreciated by those of ordinary skill in the art that a variety of alternate and/or equivalent implementations may be substituted for the specific embodiments shown and described without departing from the scope of the present embodiments. This application is intended to cover any adaptations or variations of the specific embodiments discussed herein. Therefore, it is intended that the embodiments be limited only by the claims and the equivalents thereof.

## Claims

1. A method (100) for labelling pixels of an image, the method (100) comprising:
assigning (110) one or more first pixels of the image to a first object class;
assigning (120) one or more second pixels of the image to a second object class;
assigning (130) a third object class to the first and the second pixels based on a distance of the first pixels to the second pixels and based on the first and the second object class.

2. The method (100) of claim 1, wherein the third object class is assigned to the first and the second pixels if the distance does not exceed a predefined threshold.

3. The method (100) of claim 1 or 2, wherein the method (100) comprises providing one or more composite object classes representing different predefined combinations of object classes, and wherein assigning the third object class comprises selecting from the object classes a composite object class representing a combination of the first and the second object class as third object class.

4. The method (100) of any one of the preceding claims, wherein the first object class represents a person, the second object class represents a bicycle, and the third object class represents a bicyclist, or wherein the first object class represents a person, the second object class represents a dog, and the third object class represents a person walking the dog, or the first object class represents a person, the second object class represents a walking aid, and the third object class represents a hampered person.

5. The method (100) of any one of the preceding claims, wherein the method (100) comprises using the labelled image for training a neural network for semantic segmentation and for detecting the third object class in image data.

6. The method (100) of claim 5, wherein the method (100) comprises generating a mask including the first and the second pixels for the third object class and providing the mask as ground truth for training the neural network.

7. The method (100) of any one of the preceding claims, wherein the method (100) further comprises controlling a vehicle based on the labeled pixels.

8. Training data including a labelled image obtainable by a method (100) according to any one of the preceding claims.

9. A training method for training a neural network, the training method comprising training the neural network using the training data of claim 8.

10. A neural network obtainable by a method according to claim 9.

11. A computer program comprising instructions which, when the computer program is executed by a computer, cause the computer to carry out a method (100) of any one of the claims 1 to 7 and/or 9 or to apply the neural network of claim 10.

12. A computer-readable data carrier having stored thereon the computer program of claim 11.

13. An apparatus (400) comprising:
one or more interfaces (410) for communication; and
a data processing circuit (420) configured to execute the method (100) of any one of the claims 1 to 7 and/or 9 or apply the neural network of claim 10.

14. A vehicle comprising the apparatus (400) of claim 13.
